# EUROPEAN PATENT APPLICATION

(11) **EP 0 669 475 A1**
(43) Date of publication of application: **30.08.1995**
(21) Application number: 94309430.0
(22) Date of filing: 16.12.1994
(51) Int. Cl.: F16D 3/84, F16J 3/04

(54) **Attachment of protective bellows**

(30) Priority: 24.02.1994 GB 9403500
(71) Applicant: DRAFTEX INDUSTRIES LIMITED, Edinburgh EH3 6YY, Scotland (GB)
(72) Inventor: Priser, Myriam, F-44300 Nantes (FR); Breheret, Joel, F-44199 Treillieres (FR)
(74) Representative: Foster, David Martyn

(57) **Abstract**

A protective bellows, such as for protecting a drive shaft and connected universal joint in the front wheel drive transmission of a motor vehicle, has a collar (16) sized to surround and to be clamped by a clamp (26) to the surface of a casing (18) of the universal joint. The collar is formed with a shallow channel (32) from the base of which a narrow slot (34) radially extends inwardly of the collar. The bellows is made of thermoplastic material and produced by a blow-moulding technique which causes the channel (32) and slot (36) to produce a smooth radially inwardly directed profile (36). The central part (36C) of this profile locates the collar (16) on the casing (18) by engaging within a groove (24). The portions (36A and 36B) of the profile (36) formed by the effect of the channel (32) on the blow-moulding process engage the surfaces of the casing (18) alongside the groove (24) and are clamped to the casing (18) by the clamp (26). The effect of the channel (32) is to separate the positioning or locating function, carried out by the central portion (36C) of the profile (36), from the clamping or sealing function, carried out by the clamp (26) acting on the outer portions (36A) and (36B) of the profile (36).

## Description

The invention relates to the a protective bellows, having a circumferentially extending collar for attaching the bellows around a circumferentially extending mounting surface, the collar defining an outwardly facing circumferentially extending surface for receiving a circumferential clamp and an inwardly facing circumferentially extending surface for contacting the mounting surface, the inwardly facing surface of the collar being formed with a curved profile circumferentially extending around that surface and projecting radially inwardly of the collar so that the most radially inward central region of the profile locates within a groove extending around the mounting surface and so that regions of the inwardly facing surface of the collar axially disposed on each side of the central region of the profile engage parts of the mounting surface immediately adjacent to the groove therein and are clampingly and sealingly held against those parts of the surface by the said clamp, and a narrow slot extending circumferentially around the collar in alignment with and extending into the material of the curved profile and having an open mouth facing outwardly of the collar.

For example, such a protective bellows may be a bellows for protecting universal joints such as in the front wheel drive transmission of a motor vehicle.

Such a known form of bellows is shown in GB-A-2 245 665. In this known form of bellows, the central profile not only serves to locate the collar of the bellows in the groove in the mounting surface (e.g. the outside surface of the casing of a universal joint) but its axially spaced regions are forced into contact with the parts of the mounting surface on each side of the groove therein when the clamp is tightened. The profile is thus concerned in the functions of locating as well as clamping the bellows collar in the mounting surface. This may be unsatisfactory in certain circumstances because exertion of the clamping force on the profile may distort its shape and adversely affect its locating function. The invention aims to address this problem.

Therefore, in accordance with the invention, the known form of bellows is characterised in that the outwardly facing surface of the collar is formed with a shallow channel extending around that surface and from the base of which inwardly radially extends the said slot, the slot being of lesser width measured in the axial direction of the bellows than the shallow channel, the said shallow channel substantially preventing the clamp from affecting the most radially inward central region of the profile.

Forms of protective bellows embodying the invention will now be described, by way of example only, with reference to the accompanying diagrammatic drawings in which:
Figure 1 is a side elevation, partly in cross-section, illustrating a general type of bellows;
Figure 2 illustrates one previously proposed form of attachment collar for the bellows;
Figure 3 illustrates another previously proposed form of attachment collar for the bellows;
Figure 4 is a partial cross-section corresponding to Figures 2 and 3 but showing an attachment collar for a bellows embodying the invention; and
Figure 5 corresponds to Figure 4 but shows a fixing collar in position.

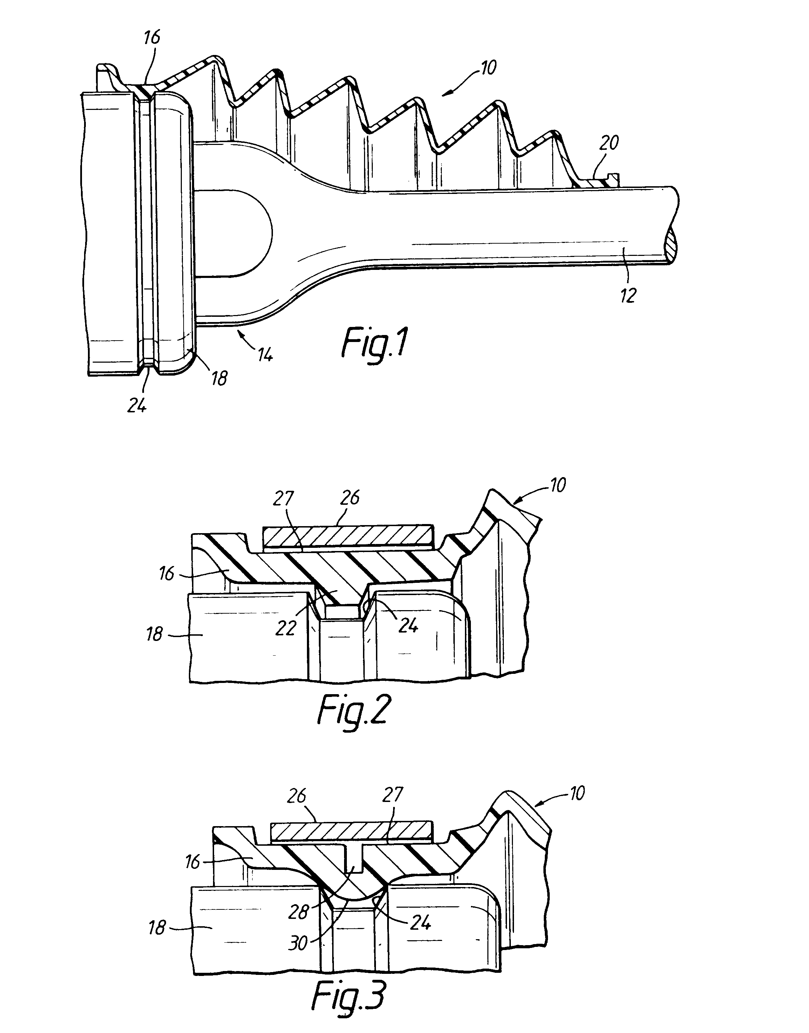

Figure 1 shows a generally known form of protective bellows 10 for protecting an end of a drive shaft 12 of the front wheel drive of a motor vehicle transmission. The shaft is connected by a universal joint shown generally at 14 to the output of the gearbox and differential assembly.

One end of the bellows 10 has an integral fixing collar 16 which fits over the casing 18 at the corresponding end of the drive shaft 12. At the other end of the bellows, it has a fixing collar 20 which surrounds the shaft 12. Figure 1 is intended to illustrate the collars 16 and 20 only generally. They are clamped in position by means of circumferentially extending clamping clips, not shown.

Figure 2 shows part of the collar 16 of Figure 1 to an enlarged scale, together with the adjacent part of the casing 18. In addition, Figure 2 illustrates a previously proposed shape for the collar for locating it on the casing 18. As indicated, the collar 18 of Figure 2 has an inwardly directed circumferential ridge or shoulder 22 which is shaped to locate within a circumferentially extending groove 24 in the casing 18. Part of a circumferentially extending clamp 26 is also shown (before it is tightened down onto the surface 27 of the collar). The ridge 22 locates the collar 16 with reference to the casing 18.

The collar 16 of Figure 2, together with the remainder of the bellows, is produced by injection moulding.

Figure 3 shows another previously proposed form for the collar 16, but this time for a bellows which is produced by blow moulding. Here, the outside surface of the collar 16 is formed with a circumferentially extending slot 28 whose shape is such that its depth is greater than its width. The presence of this slot 28 causes the blow moulding process to produce an inwardly directed circumferentially extending domed shoulder 30. Like the ridge 22 in Figure 2, the domed shoulder 30 of Figure 3 locates the collar within the groove 24 in the casing 18, and the collar is held in place by the clamp 26 (which is shown in its untightened state in Figure 3).

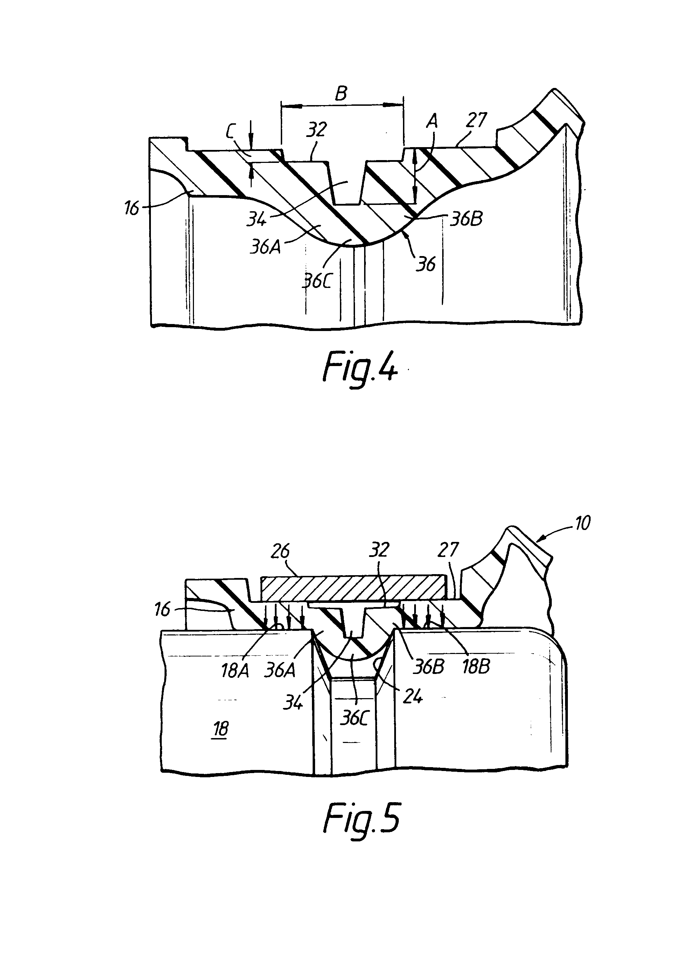

Figure 4 shows the collar 16 produced in accordance with the invention. In this case, the surface 27 of the collar is formed with a shallow circumferentially extending outwardly directed channel 32 of width B and depth C. Centrally positioned within the channel 32 is a slot 34 of depth A. B is greater than or equal to A.

The bellows of Figure 4 is produced by blow moulding. The effect of the channel 32 and the slot 34 is to cause the blow moulding process to produce a domed shoulder 36 of significantly greater cross-section or size than is the case in Figure 3; in particular, it is longer in the direction axially of the bellows than is the case in the embodiment of Figure 3. Portions 36A and 36B are produced primarily by the effect of the channel 32, while portion 36C is produced primarily by the effect of the slot 34.

Figure 5 shows the collar 16 of Figure 4 in position on the casing 18 and held by the clamp 26. The portion 36C of the shoulder 36 locates within the groove 24, while the portions 36A and 36B of the shoulder engage the sides of the mouth of the groove 24 and the portions 18A and 18B of the surface of the casing 18. The force exerted by the clamp 26 is thus primarily exerted in the direction of the arrows shown in Figure 5. The shallow channel 32 has the effect that the central part of the collar 16, that is, the region including the slot 34 and the central part 36C of the shoulder 36, is not significantly affected by the clamping force exerted by the clamp 26. In other words, the two functions to be carried out by the clamp 26 and the collar 16 - (a) positioning or locating the collar 16 on the casing 18 and (b) clamping and sealing the collar 16 to the casing 18 - are separated. The central part 36C of the shoulder 36 primarily carries out the locating function, while the clamping or sealing function is carried out by the clamp 26 acting on the portions 36A and 36B of the shoulder.

## Claims

1. A protective bellows, having a circumferentially extending collar (16) for attaching the bellows around a circumferentially extending mounting surface (18), the collar (16) defining an outwardly facing circumferentially extending surface (27) for receiving a circumferential clamp (26) and an inwardly facing circumferentially extending surface for contacting the mounting surface (18), the inwardly facing surface of the collar (16) being formed with a curved profile (30) circumferentially extending around that surface and projecting radially inwardly of the collar (16) so that the most radially inward central region of the profile (30) locates within a groove (24) extending around the mounting surface (18) and so that regions (36A,36B) of the inwardly facing surface of the collar (16) axially disposed on each side of the central region of the profile (30) engage parts of the mounting surface (18A,18B) immediately adjacent to the groove (24) therein and are clampingly and sealingly held against those parts of the surface by the said clamp (26), and a narrow slot (34) extending circumferentially around the collar (16) in alignment with and extending into the material of the curved profile (30) and having an open mouth facing outwardly of the collar (16) characterised in that the outwardly facing surface (27) of the collar (16) is formed with a shallow channel (32) extending around that surface and from the base of which inwardly radially extends the said slot (34), the slot being of lesser width measured in the axial direction of the bellows than the shallow channel (32), the said shallow channel (32) substantially preventing the clamp (26) from affecting the most radially inward central region of the profile (30).

2. A bellows according to claim 1, characterised in that it is produced by blow moulding.

3. A bellows according to claim 1 or 2, characterised in that the width across the channel (32) in the outwardly facing surface (27) of the collar (16), measured in the axial direction of the bellows, is greater than or at least equal to the depth of the said slot (34) when measured in the direction radially of the bellows.

4. A bellows according to any preceding claim, characterised in that it is made of thermoplastic material.
